# EUROPEAN PATENT SPECIFICATION

(11) **EP 1 106 860 B1**
(45) Date of publication and mention of the grant of the patent: **01.12.2004**
(21) Application number: 00308317.7
(22) Date of filing: 22.09.2000
(51) Int. Cl.: F16F 1/38

(54) **Elastomer vibration isolator bushing**
Schwingungsdämpfende Buchse mit Elastomerkörper
Manchon avec un élastomère pour l'amortissement de vibrations

(30) Priority: 30.11.1999 US 451280
(43) Date of publication of application: 13.06.2001
(73) Proprietor: GENERAL ELECTRIC COMPANY, Schenectady, NY 12345 (US)
(72) Inventor: Patel, Niranjan Jayanaibhai, Lynnfield, Massachusetts 01940 (US); Mahon, Wayne Errol, Lynnfield, Massachusetts 01940 (US)
(74) Representative: Pedder, James Cuthbert

(56) References cited:
- EP-A- 0 503 213
- FR-A- 761 299
- GB-A- 966 427
- US-A- 1 983 796
- US-A- 2 221 884
- US-A- 2 562 381
- US-A- 5 941 511

## Description

The present invention relates to a structure for reducing shear load on an elastomer bond and a method for reducing that shear load according to the preamble of claim 1 and according to the preamble of claim 6, respectively, see US-A-2 221 884.

Elastomer bushings are used in oil tank mount systems to dampen resonances and reduce vibratory loads on tank and brackets. The elastomer is effective in detuning resonances in the engine operating range. The elastomer bushings are constructed of two concentric metal cylinders, with an epoxy or other rubber member interposed between the cylinders. The metal cylinders provide necessary rigidity to the bushing. The elastomer or rubber provides the required spring rate and decoupling/vibration isolation between the structures. For example, then, an elastomer bushing may be used between oil tank and engine frame structures. In operation, the relative motion between oil tank and engine frame, or other structures, induces shear loads on the elastomer to metal cylinder bonds of the bushing. This causes the bond to deliminate or fail over time.

It would be desirable, then, to improve the bushing life of elastomer bushings used to dampen resonances and reduce vibratory loads in mechanical system

To improve bushing life, the present invention proposes reducing shear load on the elastomer epoxy bond to metal cylinders. This is accomplished by the features of claim 1 as well as by the features of claim 6.

Accordingly, the present invention provides an effective technique for improving bushing life for mechanical system components.

The invention will now be described in greater detail, by way of example, with reference to the drawing, the single figure of which illustrates an elastomer bushing constructed in accordance with the teachings of the present invention.

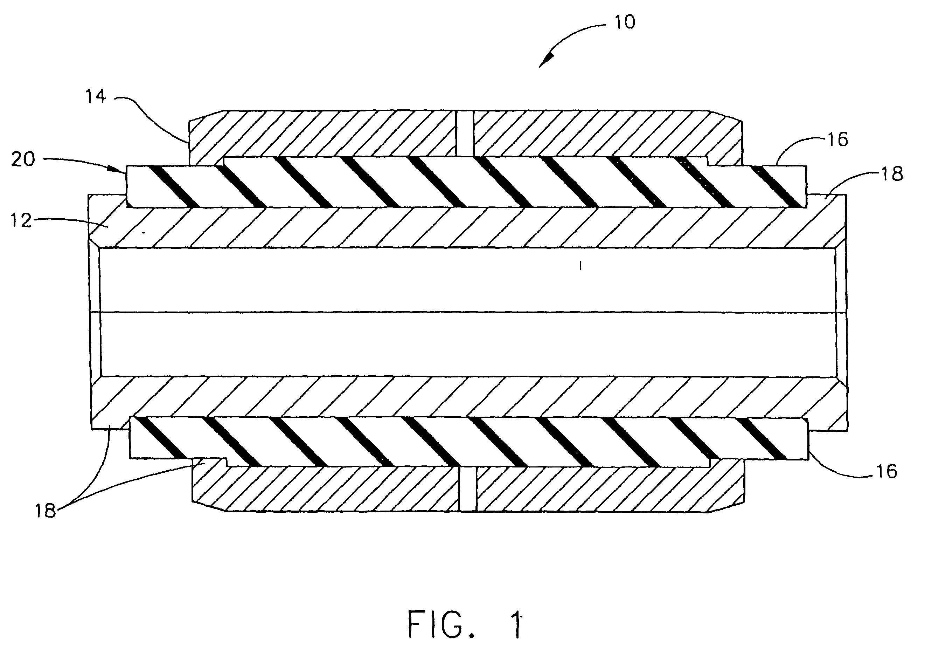

Referring to Fig. 1, there is illustrated an elastomeric bushing assembly 10. The bushing assembly 10 is typically comprised of inner and outer concentric metal sleeves or cylinders 12 and 14, respectively. A rubber or other elastomer material 16 is disposed between the two cylinders 12 and 14. In a typical bushing application, one cylinder is joined to a movable member and the other cylinder is joined to a support element. The bushing is constructed to permit controlled movement between parts, and to decouple translational and rotational vibrational modes for damping and isolation.

The inner cylinder 12 is of an internal diameter chosen to facilitate its mounting requirements. In some applications inner member 12 may be solid or rod-like rather than hollow. While the inner member 12 is commonly made of a metal such as steel, it may also be fabricated from an engineering plastic.

The internal diameter of the elastomer member 16 is somewhat less than the outer diameter of the rigid inner member 12. When in an assembled condition, this insures that the fit between the inner member 12 and the elastomeric member 16 forms a proper seal. Additionally, the elastomeric member 16 must interface with the outer member 14 to form the desired seal.

The present invention proposes the addition of end lugs 18 to the inner and outer cylinders 12 and 14 of the bushing 10. The end lugs are integral with the inner and outer cylinders 12 and 14, with the entire unit typically manufactured from stainless steel. The end lugs 18 reduce the shear load on the elastomer bond 20 to the metal cylinders 12 and 14. During operation, the relative motion between cylinders 14 and 12 induces separation or shear load in the elastomer to cylinder bond 20. With the addition of end lugs, part of this elastomer separation load is taken up into compression of the elastomer. The total shear load is reduced by the amount of compression. Hence, the end lugs 18 provide a face for the elastomer to bear on. The addition of end lugs to be integral with the cylinders provides the desired load carrying capacity.

While the invention has been described with reference to a preferred embodiment, it will be understood by those skilled in the art that various changes may be made without departing from the scope of the invention. For example, this design can be applied in various environments to various components.

## Claims

1. A structure (10) for reducing shear load on an elastomer bond (20), the structure comprising comprising:
an inner cylinder (12) coupled to a first component;
an outer cylinder (14) coupled to a second component; and
an elastomeric material (16) disposed between the inner and outer cylinders (12, 14) to create an elastomer bond and to reduce shear load on the elastomer bond (20) by taking up elastomer load into compression of the elastomer; **characterized by** .
end lugs (18) integral with the outer cylinder (14) extending radially inwardly and end lugs (18) integral with the inner cylinder (12) extending radially outwardly, and the radially inwardly directed end lugs (18) being radially spaced from the radially outwardly directed end lugs (18).

2. A structure as recited in claim 1 wherein the elastomer bond (20) provides vibration isolation between the first and second components.

3. A structure as recited in claim 1 wherein the inner and outer cylinders (12, 14) integral with the end lugs (18) are comprised of stainless steel.

4. A structure as recited in claim 1 wherein an internal diameter of the elastomer material (16) is less than an outer diameter of the inner cylinder (12).

5. A structure (10) as recited in claim 1 wherein the elastomeric material (16) interfaces with the inner and outer cylinders (12, 14) to form a seal.

6. A method for reducing shear load on an elastomer bond (20), the method comprising the steps of:
providing an inner cylinder (12) and an outer cylinder (14);
coupling the inner cylinder (12) to a first component;
coupling the outer cylinder(14) to a second component;
inserting an elastomer (16) between the inner and outer cylinder (12, 14) to create the elastomer bond (20) **characterized by** forming end lugs (18) integral with the outer cylinder (14) and extending radially inwardly and by forming end lugs (18) integral with the inner cylinder (12) and extending radially outwardly, and the radially inwardly directed end lugs (18) being radially spaced from the radially outwardly directed end lugs (18) to reduce the shear load on the elastomer bond (20).

7. A method as recited in claim 6 further comprising the step of taking up elastomer load into compression of the elastomer (16).

8. A method as recited in claim 6 further comprising the step of using the elastromer (16) to provide vibration isolation between the first and second components.

9. A method as recited in claim 6 further comprising the step of forming an internal diameter of the elastomer (16) to be less than an outer diameter of the inner cylinder.

10. A method as claimed in claim 7, 8, or 9 further comprising the step of forming an internal diameter of the elastomer (16) to be less than an outer diameter of the inner metal cylinder (12).

## Patentansprüche

1. Struktur (10) zum Verringern der Scherbelastung auf eine elastomere Bindung (20), wobei die Struktur enthält:
einen inneren Zylinder (12), der mit einer ersten Komponente verbunden ist,
einen äusseren Zylinder (14), der mit einer zweiten Komponente verbunden ist, und
ein elastomeres Material (16), das zwischen den inneren und äusseren Zylindern (12,14) angeordnet ist, um eine elastomere Bindung zu erzeugen und Scherbelastung auf die elastomere Bindung (20) zu verringern, indem Elastomerbelastung in Kompression des Elastomers aufgenommen wird, **gekennzeichnet durch**
Endansätze (18), die mit dem äusseren Zylinder (14) einstückig sind und sich radial nach innen erstrecken, und Endansätze (18), die mit dem inneren Zylinder (12) einstückig sind und sich radial nach aussen erstrecken, wobei die radial nach innen gerichteten Endansätze (18) radial im Abstand von den radial nach aussen gerichteten Endansätzen (18) angeordnet sind.

2. Struktur nach Anspruch 1, wobei die elastomere Bindung (20) für Schwingungstrennung zwischen den ersten und zweiten Komponenten sorgt.

3. Struktur nach Anspruch 1, wobei die mit den Endansätzen (18) einstückigen inneren und äusseren Zylinder (12, 14) aus rostfreiem Stahl hergestellt sind.

4. Struktur nach Anspruch 1, wobei der Innendurchmesser von dem elastomeren Material (16) kleiner ist als der Aussendurchmesser von dem inneren Zylinder (12).

5. Struktur (10) nach Anspruch 1, wobei das elastomere Material (16) mit den inneren und äusseren Zylindern (12, 14) in Eingriff sind, um eine Dichtung zu bilden.

6. Verfahren zum Verringern der Scherbelastung auf eine elastomere Bindung (20), wobei das Verfahren die Schritte enthält:
Bereitstellen eines inneren Zylinders (12) und eines äusseren Zylinders (14),
Verbinden des inneren Zylinders (12) mit einer ersten Komponente,
Verbinden des äusseren Zylinder (14) mit einer zweiten Komponente
Einfügen eines elastomeren Materials (16) zwischen den inneren und äusseren Zylindern (12,14), um eine elastomere Bindung (20) zu erzeugen, **gekennzeichnet durch**
Formen von Endansätzen (18), die mit dem äusseren Zylinder (14) einstückig sind und sich radial nach innen erstrecken, und Endansätzen (18), die mit dem inneren Zylinder (12) einstückig sind und sich radial nach aussen erstrecken, wobei die radial nach innen gerichteten Endansätze (18) radial im Abstand von den radial nach aussen gerichteten Endansätzen (18) angeordnet werden, um die Scherbelastung auf die elastomere Bindung (20) zu verringern.

7. Verfahren nach Anspruch 6, wobei ferner der Schritt vorgesehen wird, dass die elastomere Belastung in Kompression des Elastomers (16) aufgenommen wird.

8. Verfahren nach Anspruch 6, wobei ferner der Schritt vorgesehen wird, dass das Elastomer verwendet wird, um für eine Schwingungstrennung zwischen den ersten und zweiten Komponenten zu sorgen.

9. Verfahren nach Anspruch 6, wobei ferner der Schritt vorgesehen wird, dass ein Innendurchmesser des Elastomers (16) ausgebildet wird, der kleiner als der Aussendurchmesser von dem inneren Zylinder ist.

10. Verfahren nach Anspruch 7, 8 oder 9, wobei ferner der Schritt vorgesehen wird, dass ein Innendurchmesser des Elastomers (16) ausgebildet wird, der kleiner als der Aussendurchmesser von dem inneren Metallzylinder (12) ist.

## Revendications

1. Structure (10) permettant de réduire la charge de cisaillement sur une liaison en élastomère (20), la structure comprenant :
un cylindre intérieur (12) accouplé à un premier composant ;
un cylindre extérieur (14) accouplé à un deuxième composant ; et
un matériau élastomère (16) disposé entre les cylindres intérieur et extérieur (12, 14) pour créer une liaison en élastomère et pour réduire la charge de cisaillement agissant sur la liaison en élastomère (20) en prenant la charge élastomère en compression de l'élastomère ; **caractérisée par**
des pattes d'extrémité (18) intégrées au cylindre extérieur (14) s'étendant radialement vers l'intérieur et des pattes d'extrémité (18) intégrées au cylindre intérieur (12) s'étendant radialement vers l'extérieur, et les pattes d'extrémité (18) dirigées radialement vers l'intérieur étant espacées radialement par rapport aux pattes d'extrémité (18) dirigées radialement vers l'extérieur.

2. Structure selon la revendication 1, dans laquelle la liaison en élastomère (20) fournit une isolation contre les vibrations entre les premier et deuxième composants.

3. Structure selon la revendication 1, dans laquelle les cylindres intérieur et extérieur (12, 14) formés d'un seul tenant avec les pattes d'extrémité (18) sont composés d'acier inoxydable.

4. Structure selon la revendication 1, dans laquelle un diamètre intérieur du matériau élastomère (16) est inférieur à un diamètre extérieur du cylindre intérieur (12).

5. Structure (10) selon la revendication 1, dans laquelle le matériau élastomère (16) réalise une interface avec les cylindres intérieur et extérieur (12, 14) pour former un joint.

6. Procédé permettant de réduire la charge de cisaillement sur une liaison en élastomère (20), le procédé comprenant les étapes consistant à :
prendre un cylindre intérieur (12) et un cylindre extérieur (14) ;
accoupler le cylindre intérieur (12) à un premier composant ;
accoupler le cylindre extérieur (14) à un deuxième composant ;
insérer un élastomère (16) entre les cylindres intérieur et extérieur (12, 14) pour créer la liaison en élastomère (20), **caractérisé par** le fait de former des pattes d'extrémité (18) intégrées au cylindre extérieur (14) et s'étendant radialement vers l'intérieur et de former des pattes d'extrémité (18) intégrées au cylindre intérieur (12) et s'étendant radialement vers l'extérieur, et les pattes d'extrémité (18) dirigées radialement vers l'intérieur étant espacées radialement par rapport aux pattes d'extrémité (18) dirigées radialement vers l'extérieur afin de réduire la charge de cisaillement agissant sur la liaison en élastomère (20).

7. Procédé selon la revendication 6, comprenant en outre l'étape consistant à prendre la charge élastomère en compression de l'élastomère (16).

8. Procédé selon la revendication 6, comprenant en outre l'étape consistant à utiliser l'élastomère (16) pour fournir une isolation contre les vibrations entre les premier et deuxième composants.

9. Procédé selon la revendication 6, comprenant en outre l'étape consistant à former un diamètre intérieur de l'élastomère (16) de manière à ce qu'il soit inférieur à un diamètre extérieur du cylindre intérieur.

10. Procédé selon la revendication 7, 8 ou 9, comprenant en outre l'étape consistant à former un diamètre intérieur de l'élastomère (16) de manière à ce qu'il soit inférieur à un diamètre extérieur du cylindre intérieur en métal (12).
